(19) Europäisches Patentamt
European Patent Office
Office européen des brevets

(11) Veröffentlichungsnummer : **0 075 206**
**B1**

(12) **EUROPÄISCHE PATENTSCHRIFT**

(45) Veröffentlichungstag der Patentschrift : **04.07.84**

(51) Int. Cl.$^3$ : **C 09 D 3/72**, C 09 D 3/80, C 08 G 18/62, C 08 G 18/79, C 08 G 18/80

(21) Anmeldenummer : **82108291.4**

(22) Anmeldetag : **09.09.82**

(54) **Verfahren zur Herstellung von Überzügen.**

(30) Priorität : **18.09.81 DE 3137133**

(43) Veröffentlichungstag der Anmeldung : **30.03.83 Patentblatt 83/13**

(45) Bekanntmachung des Hinweises auf die Patenterteilung : **04.07.84 Patentblatt 84/27**

(84) Benannte Vertragsstaaten : **AT BE CH DE FR GB LI NL**

(56) Entgegenhaltungen :
**EP-A- 0 000 798**
**EP-A- 0 008 418**
**EP-A- 0 009 694**
**FR-A- 1 563 045**
**FR-A- 2 193 862**

(73) Patentinhaber : **BASF Aktiengesellschaft**
**Carl-Bosch-Strasse 38**
**D-6700 Ludwigshafen (DE)**

(72) Erfinder : **Lenz, Werner, Dr.**
**Heinrich-Baermann-Strasse 14**
**D-6702 Bad Duerkheim 1 (DE)**
Erfinder : **Sander, Hans, Dr.**
**Petersstrasse 2**
**D-6700 Ludwigshafen (DE)**
Erfinder : **Becker, Ernst, Dr.**
**Fichtestrasse 18**
**D-6700 Ludwigshafen (DE)**

**EP 0 075 206 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung von Überzügen unter Verwendung von Beschichtungsmitteln, welche als Bindemittel Umsetzungsprodukte von ausgewählten Polyhydroxypolyacrylatharzen mit Isocyanuratgruppen aufweisenden Polyisocyanaten einer Funktionalität zwischen 2,5 und 6, mit vorwiegend cycloaliphatisch gebundenen Isocyanatgruppen enthalten.

In der DE-OS-17 20 265 ist ein Verfahren zur Herstellung von lichtbeständigen Überzügen auf der Basis von Umsetzungsprodukten von Polyhydroxypolyacrylatharzen, hergestellt durch Copolymerisation von Monoestern der Acrylsäure und/oder Methacrylsäure mit polyfunktionellen aliphatischen Alkoholen, Estern der Acrylsäure und/oder Methacrylsäure mit monofunktionellen aliphatischen Alkoholen und/oder anderen copolymerisierbaren olefinish ungesättigten Monomeren in organischer Lösung beschrieben. Die hier angegebenen Bindemittelkombinationen aus hydroxylgruppenhaltigen Acrylatharzen mit biuretisiertem Triisocyanat ergeben hochglänzende, bei niedrigen Temperaturen rasch kratzfest aushärtende, elastische pigmentierte Lackfilme hervorragender Witterungsstabilität. Ein Nachteil dieser Lackmischungen ist allerdings die Tatsache, daß die eingesetzten biuretisierten Triisocyanate aufgrund ihrer Tendenz zur Rückspaltung in die zugrundeliegenden monomeren Diisocyanate und darüber hinaus ihrer ausgeprägten Inhalationstoxizität in Form von Sprühnebeln gewerbehygienisch nicht unbedenklich sind.

In den DE-AS-16 68 510, DE-OS-24 60 329, DE-AS-20 54 239, DE-AS-26 03 259, DE-AS-26 26 900, DE-AS-26 59 853 und DE-OS-28 51 613 sind ebenfalls Verfahren zur Herstellung von in organischer Lösung vorliegenden hydroxylgruppenhaltigen Copolymerisaten und zur Herstellung von Überzügen aus Bindemitteln auf Basis dieser Copolymerisate in Kombination mit aliphatischen biuretisierten Triisocyanaten beschrieben. Für die genannten Copolymerisate kommen als hydroxylgruppenhaltige Acrylatmonomere Umsetzungsprodukte von Acrylsäure und/oder Methacrylsäure mit dem Glycidylester einer verzweigten aliphatischen Carbonsäure mit 4 bis 26 C-Atomen und gegebenenfalls Hydroxyalkylacrylate oder -methacrylate mit 2 bis 4 C-Atomen in der Alkylkette, als Comonomere Acrylsäure- und/oder Methacrylsäureester von Alkanolen mit 1 bis 12 C-Atomen und Styrol oder Alkylstyrol zum Einsatz. Die Einführung der seitenständigen Hydroxylgruppen über den Glycidylester erfolgt hierbei durch Einpolymerisieren von Acrylsäure und/oder Methacrylsäure und gleichzeitiger Veresterung der Carboxylgruppen mit der Glycidylverbindung.

Aus den genannten Bindemittelkombinationen lassen sich ebenfalls hochglänzende, rasch härtende, kratzfeste, wasserfeste und elastische Lackfilme hoher Witterungsstabilität herstellen. Nachteilig ist aber wiederum die Tatsache, daß auch hierfür die obengenannten gewerbehygienisch nicht völlig unbedenklichen biuretisierten Triisocyanate verwendet werden.

In der DE-OS-28 36 612 wird ein Verfahren zur Herstellung von Überzügen auf Basis von Bindemitteln aus biuret-, urethan- oder isocyanuratgruppenhaltigen Lackpolyisocyanaten und hydroxylgruppenhaltigen Acrylatcopolymerisaten aus Hydroxyalkylacrylaten oder -methacrylaten mit 2 bis 4 C-Atomen im Hydroxyalkylrest, gegebenenfalls substituiertem Styrol und/oder Methylmethacrylat, Acrylsäure- und/oder Methacrylsäureester mit 1 bis 12 C-Atomen im Alkoholrest, gegebenenfalls α,β-monoolefinisch ungesättigter Mono- oder Dicarbonsäure und Acryl- und/oder Methacrylnitril beschrieben. Die Vorteile dieses Verfahrens liegen vor allem darin, daß diese Bindemittelkombinationen sowohl klare, gut verträgliche Lackmischungen als auch glänzende, schnell trocknende, harte und ausreichend elastische Lackfilme ergeben, wobei die Realisierung dieser vorteilhaften anwendungstechnischen Eigenschaften, speziell der guten Verträglichkeit mit Isocyanuratgruppen enthaltenden Polyisocyanaten, zwingend die Verwendung von 5 bis 30 Gew.-% Acrylnitril und/oder Methacrylnitril als Comonomere im hydroxylgruppenhaltigen Acrylatharz erfordert. Der Einsatz solcher nitrilgruppenhaltiger Copolymerisate in Polyurethan-Zweikomponenten-Lacken führt jedoch bei länger andauernder thermischer Belastung zu deutlicher Vergilbung und bei Bewitterung zur Kreidung der pigmentierten Lackfilme.

Der DE-OS-29 00 592 sind Umsetzungsprodukte aus Glycidylgruppen enthaltenden Acrylatharzen und hydroxylgruppenhaltigen sekundären Monoaminen zu entnehmen, wobei die Acrylatharze aus Glycidylacrylat und/oder -methacrylat, Vinylaromaten, Methylmethacrylat, Acrylnitril, Methacrylnitril, Acrylsäureestern mit 1 bis 12 und/oder Methacrylsäureestern mit 2 bis 12 C-Atomen im Alkoholrest, gegebenenfalls Hydroxyalkylacrylaten und/oder -methacrylaten mit 2 bis 4 C-Atomen im Hydroxyalkylrest und gegebenenfalls α,β-monoolefinisch ungesättigten Mono- und/oder Dicarbonsäuren statistisch copolymerisiert sind, und als Vernetzungskomponenten in Kombination mit Polyisocyanaten, die auch Isocyanuratgruppen aufweisen können, verwendet werden. Die in dieser Anmeldung beanspruchte Acrylatharzkomponente beinhaltet also als funktionelle Gruppen außer Hydroxylgruppen zwingend tertiäre Aminogruppen. Neben der guten Verträglichkeit dieser Bindemittelkombinationen mit aromatischen Lösungsmitteln werden vor allem die trotz der anwesenden tertiären Aminogruppen überraschend hohen Standzeiten hervorgehoben. Hierbei wird aber als Vergleich ein Umsetzungsprodukt auf Basis von Diethanolamin, d. h. ebenfalls ein tertiäre Aminogruppen enthaltendes Acrylatharz mit Hydroxylgruppen (s. Beispiel 9), nicht dagegen ein entsprechendes aminogruppenfreies Copolymerisat angeführt, so daß eine vergleichende Beurteilung gegenüber dem Stand der Technik nicht möglich ist. Außerdem besitzen Bindemittel, die aminogruppenhaltige Copolymerisate enthalten, den Nachteil einer geringeren — z. B.

für Automobilreparaturdecklacke aber dringend erforderlichen — Säurebeständigkeit im Vergleich zu aminogruppenfreien Systemen.

Im Gegensatz zu den bisher vorzugsweise in Automobildecklacken eingesetzten biuretisierten aliphatischen Polyisocyanaten zeiten Isocyanuratgruppenhaltige Polyisocyanate mit vorwiegend cycloaliphatisch gebundenen Isocyanatgruppen, vorzugsweise durch Trimerisierung von 3-Isocyanatomethyl-3,5,5-trimethyl-cyclohexylisocyanat gemäß der GB-PS-13 91 066, DE-OS-23 25 826 und 27 32 662 hergestellte Produkte, auch in Form von Aerosolen, nur eine äußerst geringe Inhalationstoxizität, was für die Verwendung bei der Automobilreparaturlackierung von großem Vorteil ist. Gleichzeitig werden in Kombination mit geeigneten Polyolen Lackfilme hoher Witterungsstabilität und Vergilbungsresistenz erhalten.

Werden die dem Stand der Technik entsprechenden hydroxylgruppenhaltigen Polyacrylatharze, wie sie etwa in den oben gennanten Anmeldungen DE-AS-16 68 510, DE-OS-24 60 329, DE-AS-20 54 239, 26 03 259, 26 26 900, 26 59 853 und DE-OS-28 51 613 beschrieben sind, d. h. auf Basis von Hydroxyalkylacrylaten und/oder -methacrylaten mit 2 bis 3 C-Atomen in der Hauptkette des Alkoholrestes, gegebenenfalls kombiniert mit Addukten von Glycidylestern einer verzweigten aliphatischen Monocarbonsäure an Acrylsäure und/oder Methacrylsäure, mit diesen Isocyanuratgruppen enthaltenden cycloaliphatischen Polyisocyanaten kombiniert, so erhält man hieraus bei allen für Automobilreparaturlackierungen üblichen Härtungstemperaturen zwischen Raumtemperatur und 80 °C Lackfilme mit unzureichenden mechanischen Eigenschaften. Etwa bei Verwendung von Acrylatharzen mit hohen Hydroxylzahlen (⩾ 100) und vorwiegend aus Monomeren, die Homopolymerisate hoher Glasübergangstemperatur (⩾ 20 °C) ergeben, erhält man bei praxisüblichen ärtungsbedingungen (etwa 7d/Raumtemperatur oder maximal 30 bis 60 min/80 °C) zwar Lackfilme ausreichender Kratzfestigkeit aber sehr hoher Sprödigkeit, die den Praxisanforderungen nicht genügen. Der Einsatz von Acrylatharzen niedrigerer Hydroxylzahlen (< 100) mit hohen Anteilen an Monomerbausteinen, die Homopolymerisate niedriger Glasübergangstemperatur (⩽ 5 °C) ergeben, führt entsprechend zu Lackfilmen zwar ausreichender Flexibilität aber für die Praxis zu geringer Kratzfestigkeit. Verwendung größerer Katalysatormengen ergibt zwar zum Teil Filme sowohl verbesserter Flexibilität als auch Kratzfestigkeit, dagegen Lackmischungen mit zu kurzer Topfzeit.

Bei Kombination der in der DE-OS-28 36 612 beschriebenen Polyhydroxypolyacrylate, die zwingend Nitrilseitengruppen enthalten, mit Isocyanuratgruppen aufweisenden Polyisocyanaten und vorwiegeng cycloaliphatisch gebundenen Isocyanatgruppen erhält man, wie oben erwähnt, für Automobilreparaturdecklacke nicht brauchbare Lackschichten zu starker Vergilbungstendenz und nicht ausreichender Witterungsstabilität. Die in der DE-OS-29 00 592 beanspruchten, gleichzeitig zwingend Hydroxyl- und tertiäre Aminogruppen aufweisenden Acrylatharze zeigen in Kombination mit diesen Polyisocyanaten, wie oben erwähnt, vor allem Probleme bezüglich ausreichender Säurestabilität der Lackfilme.

Aufgabe der vorliegenden Erfindung war es daher, ein neues Verfahren zur Herstellung von Überzügen zur Verfügung zu stellen, bei welchem Bindemittel auf Basis isocyanuratgruppenhaltiger Polyisocyanate einer Funktionalität zwischen 2,5 und 6, bevorzugt 3 und 5, mit vorwiegend cycloaliphatisch gebundenen Isocyanatgruppen und Hydroxylgruppen aufweisender Polyacrylatharze in organischer Lösung zum Einsatz kommen, welche nicht die genannten technischen Nachteile besitzen : d. h. ausgehend von Lackmischungen genügend langer Topfzeit, bei niedrigen Temperaturen rasch härtende, nicht vergilbende, säurebeständige Filme gleichzeitig hoher Flexibilität, Kratzfestigkeit und Witerrungsstabilität bzw. Kreidungsbeständigkeit ergeben.

Unter Funktionalität im Sinne der Erfindung wird die durchschnittliche Zahl der reaktionsfähigen, gegebenenfalls verkappten, Isocyanatgruppen pro Polyisocyanatmolekül verstanden.

Überraschenderweise ließ sich die Aufgabe der Erfindung dadurch lösen, daß Überzüge auf Basis von gegebenenfalls teilweise oder vollständig verkappte, bevorzugt unverkappte, Isocyanuratgruppen enthaltenden Polyisocyanaten einer Funktionalität zwischen 2,5 und 6, bevorzugt 3 bis 5, mit vorwiegend cycloaliphatisch gebundenen Isocyanatgruppen durch Umsetzung mit hydroxylgruppenhaltigen Polyacrylaten spezieller Zusammensetzung hergestellt werden.

Gegenstand der vorliegenden Erfindung ist ein Verfahren zur Herstellung von Überzügen auf der Basis von Umsetzungsprodukten von

(A) Polyhydroxypolyacrylatharzen aus Estern der Acrylsäure und/oder Methacrylsäure mit monofunktionellen aliphatischen Alkoholen, Monoestern der Acrylsäure und/oder Methacrylsäure mit polyfunktionellen aliphatischen Alkoholen und anderen copolymerisierbaren olefinisch ungesättigten Monomeren mit

(B) gegebenenfalls teilweise oder vollständig mit CH-, NH- oder OH-aciden Blockierungsmitteln verkappten, Isocyanuratgruppen aufweisenden Polyisocyanaten einer Funktionalität zwischen 2,5 und 6, das dadurch gekennzeichnet ist, daß man als Polyhydroxypolyacrylatharze (A) hydroxylgruppenhaltige Copolymerisate aus

(a) 5 bis 70 Gew.-% mindestens eines Esters der allgemeinen Formel

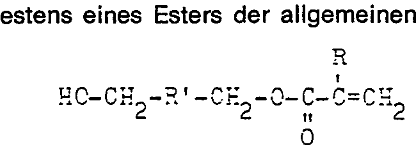

wobei

R für Wasserstoff oder eine Methylgruppe,

R' für einen gerad- oder verzweigtkettigen Alkylenrest mit 2 bis 8 C-Atomen in der Hauptkette oder einen eine cycloaliphatische Gruppe enthaltenden Alkylenrest mit 5 bis 15 C-Atomen stehen,

(b) 0 bis 40 Gew.-% eines oder mehrerer Hydroxyalkylester der Acrylsäure und/oder Methacrylsäure mit 2 bis 3 C-Atomen in der Hauptkette des Hydroxyalkylrests,

(c) 10 bis 50 Gew.-% mindestens eines Alkylesters der Acrylsäure und/oder Methacrylsäure, der Homopolymerisate mit Glasübergangstemperaturen von + 5 °C bis + 120 °C bildet,

(d) 0 bis 20 Gew.-% eines Vinylaromaten,

(e) 10 bis 50 Gew.-% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von − 80 °C bis + 4,5 °C bildet,

(f) 0 bis 15 Gew.-% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

(g) 0 bis 10 Gew.-% einer α,β-monoolefinisch ungesättigten Mono- oder Dicarbonsäure mit 3 bis 5 C-Atomen oder eines Halbesters dieser Dicarbonsäuren,

(h) 0 bis 20 Gew.-% unter (a) bis (g) nicht genannter Monomerer, deren einpolymerisierte Reste gegenüber Isocyanatgruppen inert sind,

mit der Maßgabe, daß die Summe der unter (a) und (b) genannten Prozentzahlen 5 bis 70, die Summe der unter (c) und (d) genannten Prozentzahlen 10 bis 50 und die Summe der Prozentzahlen der unter (a) bis (h) genannten Komponenten 100 beträgt, und als Isocyanuratgruppen aufweisende Polyisocyanate (B) einer Funktionalität zwischen 2,5 und 6 solche mit vorwiegend cycloaliphatisch gebundenen Isocyanatgruppen einsetzt.

Bevorzugt verwendet man als cycloaliphatisches isocyanuratgruppenhaltiges Polyisocyanat (B) ein aus 3-Isocyanatomethyl-3,5,5-trimethyl-cyclohexylisocyanat als monomerem Diisocyanat erhaltenes Produkt, sowie als hydroxylgruppenhaltige Copolymerisate (A) solche mit Hydroxylzahlen zwischen 30 und 200. Bevorzugt wählt man außerdem die Mengenverhältnisse der Reaktionskomponenten (A) und (B) des Beschichtungssystems so, daß das Äquivalentverhältnis von gegebenenfalls teilweise oder vollständig mit CH-, NH- oder OH-aciden Blockierungsmitteln verkappten Isocyanatgruppen zu reaktionsfähigen Hydroxylgruppen zwischen 0,25 : 1 und 4 : 1 liegt.

Zu den für das erfindungsgemäße Verfahren zu verwendenden Umsetzungsprodukten und deren Aufbaukomponenten ist im einzelnen folgendes auszuführen :

(A) Als Polyhydroxypolyacrylatharze (A) kommen hydroxylgruppenhaltige Copolymerisate aus

(a) 5 bis 70 Gew.-% mindestens eines Esters der allgemeinen Formel

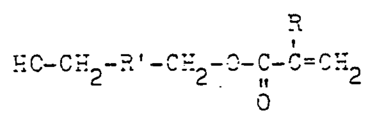

wobei

R für Wasserstoff oder eine Methylgruppe,

R' für einen gerad- oder verzweigtkettigen Alkylenrest mit 2 bis 8 C-Atomen in der Hauptkette oder einen eine cycloaliphatische Gruppe enthaltenden Alkylenrest mit 5 bis 15 C-Atomen stehen,

(b) 0 bis 40 Gew.-% eines oder mehrerer Hydroxyalkylester der Acrylsäure und/oder Methacrylsäure mit 2 bis 3 C-Atomen in der Haptkette des Hydroxyalkylrests,

(c) 10 bis 50 Gew.-% mindestens eines Alkylesters der Acrylsäure und/oder Methacrylsäure, der Homopolymerisate mit Glasübergangstemperaturen von + 5 °C bis + 120 °C bildet,

(d) 0 bis 20 Gew.-% eines Vinylaromaten,

(e) 10 bis 50 Gew.-% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von − 80 °C bis + 4,5 °C bildet,

(f) 0 bis 15 Gew.-% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

(g) 0 bis 10 Gew.-% einer α,β-monoolefinisch ungesättigten Mono- oder Dicarbonsäure mit 3 bis 5 C-Atomen, oder eines Halbesters dieser Dicarbonsäuren,

(h) 0 bis 20 Gew.-% unter (a) bis (g) nicht genannter Monomerer, deren einpolymerisierte Reste gegenüber Isocyanatgruppen inert sind,

mit der Maßgabe, daß die Summe der unter (a) und (b) genannten Prozentzahlen 5 bis 70, die Summe der unter (c) und (d) genannten Prozentzahlen 10 bis 50 und die Summe der Prozentzahlen der unter (a) bis (h) genannten Komponenten 100 beträgt, in Frage.

(a) Als Ester der allgemeinen Formel

$$HO-CH_2-R'-CH_2-O-\underset{\underset{O}{\parallel}}{C}-\overset{\overset{R}{|}}{C}=CH_2$$

wobei R für Wasserstoff oder eine Methylgruppe und R' für einen gerad- oder verzweigtkettigen Alkylenrest mit 2 bis 8 Kohlenstoffatomen in der Hauptkette oder einen eine Cycloaliphatische Gruppe enthaltenden Alkylenrest mit 5 bit 15 Kohlenstoffatomen stehen, eignen sich beispielsweise Monoester zweiwertiger Alkohole, wie Decandiol-1,10, Octandiol-1,8, Pentandiol-1,5, 1,4-Dihydroxymethylcyclohexan, 3(4),8(9)-Dihydroxymethyltricyclo [5.2.1.0$^{2,6}$]-decan, Butandiol-1,4 oder Hexandiol-1,6 mit Acrylsäure oder Methacrylsäure, z. B. Decandiol-1,10-monoacrylat, Decandiol-1,10-monomethacrylat, Octandiol-1,8-monoacrylat, Octandiol-1,8-monomethacrylat, Pentandiol-1,5-monoacrylat, Pentandiol-1,5-monomethacrylat, 1,4-Dihydroxymethylcyclohexanmonoacrylat, 1,4-Dihydroxymethylcyclohexanmonometh acrylat, 3(4),8(9)-Dihydroxymethyltricyclo [5.2.1.0$^{2,6}$]-decanmonoacrylat und -monomethacrylat, Butandiol-1,4-monomethacrylat, Hexandiol-1,6-monomethacrylat, sowie vorzugsweise Butandiol-1,4-monoacrylat und Hexandiol-1,6-monoacrylat, sowie deren Mischungen.

Komponente (a) ist im erfindungsgemäß verwendenden Copolymerisat (A) in einer Menge von 5 bis 70, vorzugsweise 5 bis 40 Gewichtsprozent einpolymerisiert.

(b) Als Hydroxyalkylester der Acrylsäure und/oder Methacrylsäure mit 2 bis 3 Kohlenstoffatomen in der Hauptkette des Hydroxyalkylrests eignen sich z. B. 2-Hydroxyethylacrylat, 2-Hydroxethylmethacrylat, 2-Hydroxypropylacrylat, 2-Hydrocypropylmethacrylat, Versaticsäureglycidylesteracrylat, Versaticsäureglycidylestermethacrylat, vorzugsweise 2-Hydroxyethylacrylat und 2-Hydroxyethylmethacrylat. Desgleichen eignen sich Gemische der genannten Hydroxyalkyl(meth)acrylate. Komponente (b) kann in einer menge von 0 bis 40, vorzugsweise 0 bis 25 Gew.-% im Polyhydroxypolyacrylatharz (A) einpolymerisiert sein. Die Summe der unter (a) und (b) genannten Prozentzahlen beträgt 5 bis 70, vorzugsweise 5 bis 40.

(c) Als Alkylester der Acrylsäure und/oder Methacrylsäure, die Homopolymerisate mit Glasübergangstemperaturen von + 5 °C bis + 120 °C bilden, kommen z. B. in Frage Methylacrylat, Methylmethacrylat, Ethylmethacrylat, tert.-Butylacrylat, n-Butylmethacrylat und i-Butylmethacrylat oder deren Mischungen, wobei Methylmethacrylat und tert.-Butylacrylat bevorzugt sind.

Komponente (c) ist im erfindungsgemäß zu verwendenden Copolymerisat (A) in einer Menge von 10 bis 50, vorzugsweise 25 bis 50 Gewichtsprozent einpolymerisiert.

(d) Als Vinylaromaten kommen beispielsweise Styrol, α-Methylstyrol, o- und p-Chlorstyrol, o-, m-, p-Methylstyrol und p-tert.-Butylstyrol oder deren Gemische in Betracht, wobei Styrol bevorzugt ist.

Die Vinylaromaten (d) können im Polyhydroxypolyacrylatharz (A) in Mengen von 0 bis 20, vorzugsweise 0 bis 10 Gewichtsprozent einpolymerisiert sein.

Die Summe der unter (c) und (d) genannten Prozentzahlen beträgt 10 bis 50, vorzugsweise 25 bis 50.

(e) Als Alkylester und/oder bis zu 2 Ethersauerstoffbrücken enthaltende Alkylglykolester der Acrylsäure und/oder Methacrylsäure, die Homopolymerisate mit Glasübergangstemperaturen von − 80 bis + 4,5 °C bilden, sind beispielsweise Ethylacrylat, n-Butylacrylat, i-Butylacrylat, 2-Ethylhexylacrylat, 2-Ethylhexylmethacrylat, Ethylglykolacrylat, Ethylglykolmethacrylat, Ethyldiglykolacrylat, Ethyldiglykolmethacrylat, Laurylacrylat und Laurylmethacrylat, oder deren Mischungen geeignet, wobei n-Butylacrylat und i-Butylacrylat bevorzugt sind. Komponente (e) ist im erfindungsgemäß zu verwendenden Copolymerisat (A) in einer Menge von 10 bis 50, vorzugsweise 20 bis 45 Gewichtsprozent einpolymerisiert.

(f) Als Amide der Acrylsäure und/oder Methacrylsäure, die am Amidstickstoff gegebenenfalls einen oder zwei Alkylreste mit 1 bis 8 Kohlenstoffatomen, die gegebenenfalls eine Carbonylgruppe enthalten können, oder einen oder zwei Phenylreste als Substituenten tragen, kommen beispielsweise Acrylamid, Methacrylamid, N-Methylacrylamid, N-Methylmethacrylamid, N-Ethylacrylamid, N-Isopropylacrylamid, N,N-Dimethylacrylamid, N,N-Diethylacrylamid, N,N-Diisopropylacrylamid, N-Phenylacrylamid, N,N-Di-n-butylacrylamid und N-(1,1-dimethyl-3-oxo-butyl)-acrylamid (= Diacetoacrylamid), vorzugsweise Acrylamid und Methacrylamid, in Betracht.

(g) Als α,β-monoolefinisch ungesättigte Mono- oder Dicarbonsäuren mit 3 bis 5 Kohlenstoffatomen oder Halbester dieser Dicarbonsäuren eignen sich beispielsweise Acrylsäure, Methacrylsäure, Maleinsäure, Fumarsäure, Crotonsäure, Itaconsäure, Citraconsäure und Maleinsäurehalbester mit 4 bis 8 Kohlenstoffatome entheltenden Monoalkanolen und deren Gemische, wobei Acrylsäure bevorzugt ist.

Komponente (f) kann im Polyhydroxypolyacrylatharz in einer Menge von 0 bis 10, vorzugsweise 0 bis 3 Gewichtsprozent einpolymerisiert sein.

(h) Als unter (a) bis (g) nicht genannte Monomere, deren einpolymerisierte Reste gegenüber Isocyanatgruppen inert sind, die also unter den beim erfindungsgemäßen Verfahren in Frage kommenden Umsetzungsbedingungen nicht mit Isocyanat- oder verkappten Isocyanatgruppierungen reagieren, seien beispielsweise genannt Vinylester mit 1 bis 12 Kohlenstoffatome enthaltenden Carbonsäuren, wie z. B. Vinylacetat, Vinylpropionat, Vinylpivalat, Vinyl-2-ethylhexanat, Vinyllaurat, Vinylbenzoat, Vinylhalogenide, wie z. B. Vinylchlorid, Vinylidenhalogenide, wie etwa Vinylidenchlorid, N-Vinylverbindungen wie z. B. N-Vinylpyrrolidon und N-Vinylcaprolactam und Gemische der genannten Monomeren.

Komponente (h) kann im Polyhydroxypolyacrylatharz in einer Menge von 0 bis 20, vorzugsweise 0 bis

10 Gewichtsprozent einpolymerisiert sein.

Die Summe der unter (a) bis (h) genannten Prozentzahlen beträgt 100.

Das hydroxylgruppenhaltige Copolymerisat (A) weist im allgemeinen Hydroxylzahlen zwischen 30 und 200, vorzugsweise 50 bis 150 auf.

Das Polyhydroxypolyacrylatharz (A) läßt sich aus den Monomeren (a) bis (h) nach üblichen Polymerisationsverfahren, beispielsweise durch kontinuierliche oder diskontinuierliche radikalinitiierte Polymerisation, vorzugsweise diskontinuierlich in organischer Lösung bei Temperaturen zwischen 80 und 160 °C, z. B. in Gegenwart radikalliefernder Polymerisationsinitiatoren herstellen. Für das erfindungsgemäße Verfahren werden die Polyhydroxypolyacrylatharze (A), die im allgemeinen mittlere Molekulargewichte ($M_n$) zwischen 1 000 und 20 000 bzw. K-Werte (nach Fikentscher) zwischen 12 und 40, vorzugsweise zwischen 15 und 30 aufweisen zweckmäßigerweise in organischen, gegenüber Isocyanatgruppen inerten Lösungsmitteln gelöst eingesetzt. Derartige geeignete Lösungsmittel sind. z. B. Ester, wie n-Butylacetat, Ethylacetat und Isopropylacetat, Ether, wie z. B. Tetrahydrofuran, Dioxan und Diethylglykol, Etherester, wie z. B. Ethylglykolacetat, Methylglykolacetat und Butylglykolacetat, Kohlenwasserstoffe, insbesondere aromatische Kohlenwasserstoffe wie Xylol oder Toluol, Ethylbenzol und Chlorbenzol, sowie Gemische dieser Lösungsmittel.

(B) Als gegebenenfalls teilweise oder vollständig mit CH-, NH- oder OH-aciden Blockierungsmitteln verkappte, Isocyanuratgruppen aufweisende Polyisocyanate einer Funktionalität zwischen 2,5 und 6, vorzugsweise zwischen 3 und 5 eignen sich erfindungsgemäß solche mit vorwiegend cycloaliphatisch gebundenen Isocyanatgruppen. Bevorzugt sind dabei derartige Isocyanuratgruppen enthaltende Polyisocyanate, die aus 3-Isocyanatomethyl-3,5,5-trimethylcyclohexylisocyanat (= Isophorondiisocyanat = IPDI) als monomerem Diisocyanat erhalten werden. Die Herstellung derartiger Isocyanuratgruppen enthaltender Polyisocyanate erfolgt nach üblichen Methoden, wie sie beispielsweise in der GB-PS-13 91 066, DE-OS-23 25 826, DE-OS-27 32 662 beschrieben sind, durch Trimerisierung des Diisocyanats bei Temperaturen zwischen ca. 40 und 120 °C in Anwesenheit von katalysatoren, wie etwa Metallverbindungen, z. B. Metallnaphthenaten, Erdalkaliacetaten, -formiaten und -carbonaten, Metallalkoxiden und Eisenacetylacetonat, bevorzugt sekundären und tertiären Aminen, wie Aziridinen in Kombination mit Trialkylaminen oder Triethylendiamin, kombiniert mit Propylenoxid.

Ebenfalls in Frage kommen Isocyanuratgruppen aufweisende Polyisocyanate auf Basis von 1,4-Diisocyanatocyclohexan (= Cyclohexan-1,4-diisocyanat) und 4,4'-Diisocyanatodicyclohexylmethan (= Dicyclohexylmethan-4,4'-diisocyanat).

Als für die Lackpolyisocyanate (B) zu verwendende Blockierungsmittel kommen in Frage : CH-, NH- oder OH-acide Blockierungsmittel wie z. B. Malonsäuredialkylester, Acetessigsäurealkylester, Acetylaceton, ε-Caprolactam, Pyrrolidon, Phenole, p-Hydroxybenzoesäureester, Cyclohexanol, t-Butanol, bevorzugt Oxime wie Benzophenonoxim, Cyclohexanonoxim, Methylethylketoxim, Dimethylketoxim, besonders bevorzugt sind dabei Methylethylketoxim und Dimethylketoxim.

Komponente (B) kann unverkappt, teilweise oder vollständig verkappt sein. Bevorzugt sind unverkappte Polyisocyanate.

Die Mengenverhältnisse der erfindungsgemäß zu verwendenden beiden Bindemittelkomponenten Polyisocyanat (B) und Polyhydroxypolyacrylat (A) werden zweckmäßigerweise so gewählt, daß das Äquivalentverhältnis von — gegebenenfalls verkappten — Isocyanatgruppen zu reaktionsfähigen Hydroxylgruppen zwischen 0,25 : 1 und 4 : 1, vorzugsweise zwischen 0,5 : 1 und 2 : 1, liegt.

Die Herstellung von Überzügen nach dem erfindungsgemäßen Verfahren erfolgt durch Vermischen der Komponenten (A) und (B), zweckmäßigerweise gelöst in organischem Lösungsmittel oder Lösungsmittelgemisch, gegebenenfalls Zusatz von Pigmenten, wie üblichen Weiß- und Schwarzpigmenten, etwa Titandioxiden (Rutil), Zinksulfiden und Ruß oder Buntpigmenten, z. B. Cadmiumsulfid, Eisenoxidgelb, Eisenoxidrot, Chromoxid, Benzidingelb, Phthalocyaninblau, Phthalocyaningrün, Thioindigo und Chinacridonen, z. B. in Mengen von bis zu 250 %, bezogen auf Gesamtmenge Bindemittel (= Komponenten (A) und (B)), katalysatoren, wie z. B. Metallverbindungen, etwa Blei-, Zink- und Kobaltnaphthenate, Blei-, Zinn- und Calciumoctoat, Dibutylzinndiacetat, Dibutylzinndilaurat, Eisenacetylacetonat und Basen wie Triethylendiamin und Diethylethanolamin in Mengen von ca. 0,001 bis 10 Gew.-%, bezogen auf die Gesamtbindemittelmenge und/oder anderer für die Verarbeitung von 2-Komponentenlacken üblichen Hilfs- und Zusatzstoffen und Auftragen auf das zu überziehende Substrat.

Vorzugsweise jedoch erfolgt die Herstellung der Überzüge ohne Zugabe von Katalysatoren, da die erfindungsgemäßen Lackmischungen überraschenderweise auch ohne Beschleuniger sehr rasch zu harten kratzfesten Schichten aushärten und dabei gleichzeitig praxisgerechte Topfzeiten von einem bis zu mehreren Tagen ergeben.

Als Auftragsmethoden kommen die üblichen in Betracht, beispielsweise Spritzen, Tauchen, Streichen oder Walzen.

Nach dem erfindungsgemäßen Verfahren lassen sich beispielsweise Metallteile aus Aluminium, Zink, Zinn, Eisen und Stahl, wie Stahlbleche, oder verzinkte Stahlbleche und Aluminiumbleche beschichten.

Die Härtung der Überzüge kann nach dem Auftragen auf das Substrat in üblicher Weise erfolgen, beispielsweise bei Raumtemperatur innerhalb von 24 Stunden bis 7 Tagen, oder zweckmäßigerweise nach Ablüften bei Raumtemperatur, bei Temperaturen von etwa 60 bis 80 °C innerhalb von 20 bis 60 Minuten.

Nach dem erfindungsgemäßen Verfahren lassen sich Überzüge mit besonders vorteilhaften Eigenschaften erhalten. Die erfindungsgemäß erhaltenen Überzüge zeichnen sich insbesondere durch hohe Kratzfestigkeit, gleichzeitig hohe Elastizität, guten Glanz und hervorragende Witterungsstabilität bei rascher Härtung und relativ langen Topfzeiten der zugrundeliegenden Lackmischungen aus.

Die in den Beispielen und Vergleichsbeispielen genannten Teile und Prozente sind, soweit nicht anders angegeben, Gewichtsteile und Gewichtsprozente.

## Herstellung der Polyhydroxypolyacrylatharze

### Beispiele 1 bis 7

Herstellung von erfindungsgemäß geeigneten Polyacrylatharzen

und

### Vergleichsbeispiele I und II

Herstellung von Polyacrylatharzen entsprechend dem Stand der Technik.

In einem mit Blattrührer, Rückflußkühler, Zulaufgefäß, Thermometer und Gaseinleitungsrohr versehenen Reaktionsgefäß werden 100 Teile n-Butylacetat auf jeweils die in Tabelle 1 angegebene Temperatur erhitzt. Unter Einhalten dieser Temperatur und starkem Rühren werden die Lösungen der in der Tabelle 1 aufgeführten Comonomermischungen und des als Polymerisationsinitiator verwendeten Azodiisobuttersäurenitrils in n-Butylacetat mit konstanter Zulaufgeschwindigkeit unter Luftausschluß (im schwachen Stickstoffstrom) innerhalb eines Zeitraumes von 4 Stunden zugetropft. Anschließend werden zur Nachpolymerisation noch 5 Teile Azodiisobuttersäurenitril in 100 Teilen n-Butylacetat im Verlauf von 2 Stunden gleichmäßig zudosiert.

### Vergleichsbeispiel III

In einem wie oben beschriebenen Reaktionsgefäß wird eine Mischung aus 100 Teilen Ethylglykolacetat, 200 Teile Xylol und 149 Teile Glycidylester von α,β-Dialkylalkanmonocarbonsäuren der Bruttoformel $C_{13}H_{24}O_3$ auf 135 °C erhitzt. Anschließend wird bei dieser Temperatur ein Gemisch aus 101 Teilen methylmethacrylat, 94 Teilen Hydroxyethylmethacrylat, 111 Teilen Styrol, 44 Teilen Acrylsaüre, 1,5 Teilen t-Dodecylmercaptan und 5 Teilen Di-tert.-Butyl-peroxid im Verlauf von 2 Stunden mit konstanter Zulaufgeschwindigkeit zugetropft und die Harzlösung noch 6 Stunden bei 135 °C nachreagieren lassen. Die Polymerisatlösung mit einem Festkörpergehalt von 60 % wird mit Xylol auf 50 % Feststoffgehalt verdünnt und besitzt eine Auslaufzeit von 250 sec im DIN-Becher 4 bei 23 °C. Weitere Kennzahlen : OH-Zahl (bez. auf fest) : 150, Säurezahl 7, K-Wert : 23,9

(Siehe Tabelle 1 Seite 8 f.)

Tabelle 1

| Beispiel | | 1 | 2 | 3 | 4 | 5 | 6 | 7 | Vergleichsbeispiel Nr. I | II |
|---|---|---|---|---|---|---|---|---|---|---|
| Butandiol-1,4-monoacrylat | (Teile) | 97,5 | 130 | 160 | 65 | 32,5 | | | | |
| Hexandiol-1,4-monoacrylat | " | | | | | | 152,5 | 115 | | |
| Hydroxyethylacrylat | " | | | | 52,5 | 77,5 | | | 102,5 | |
| Hydroxyethylmethacrylat | " | | | | | | | | | 117,5 |
| Methylmethacrylat | " | 50 | 50 | 50 | 50 | 50 | 50 | 50 | 50 | 50 |
| t-Butylacrylat | " | 185 | 152,5 | 122,5 | 152,5 | 152,5 | 152,5 | 152,5 | 152,5 | 152,5 |
| n-Butylacrylat | " | 165 | 165 | 165 | 177,5 | 185 | 142,5 | 180 | 192,5 | 177,5 |
| Acrylsäure | " | 2,5 | 2,5 | 2,5 | 2,5 | 2,5 | 2,5 | 2,5 | 2,5 | 2,5 |
| Azoisobuttersäurenitril | " | 10 | 10 | 10 | 10 | 10 | 10 | 10 | 10 | 10 |
| n-Butylacetat | " | 133 | 133 | 133 | 133 | 133 | 133 | 133 | 133 | 133 |
| Polymerisationstemperatur ($^{o}C$) | | 115-120 | 115-120 | 115-120 | 100 | 100-105 | 120 | 115 | 115-120 | 115-120 |
| OH-Zahl | (mg KOH/g fest) | 75 | 100 | 125 | 100 | 100 | 100 | 75 | 100 | 100 |
| Säurezahl | | 2,7 | 2,8 | 2,9 | 3,0 | 3,2 | 3,7 | 3,0 | 4,0 | 4,5 |
| Auslaufzeit (sec; DIN-Becher 4; 23 $^{o}C$) | | 95 | 126 | 160 | 171 | 180 | 91 | 80 | 109 | 164 |
| K-Wert (3 %ig in Dimethylformamid) | | 19,5 | 20,7 | 21,1 | 23,1 | 23,2 | 19,3 | 19,0 | 19,8 | 19,8 |

1. Prüfung unpigmentierter Zweikomponenten-Reaktionslacke :

Die in den Beispielen 1 bis 7 und den Vergleichsbeispielen I bis III beschriebenen Polyacrylatharze werden mit isocyanuratgruppenhaltigem Polyisocyanat auf Basis von Isophorondiisocyanat (IPDI) kombiniert.

Dazu werden jeweils 500 Teile der Copolymerisatlösung mit Festkörpergehalten von ca. 60 %, bzw. 50 % für Vergleichsbeispiel III, mit der stöchiometrischen Menge (OH/NCO = 1 : 1, vgl. Tabelle 2) einer 70 % igen Lösung des Polyisocyanats in Ethylglykolacetat/Xylol 1 : 1 (NCO-Gehalt ca. 12 %) gründlich vermischt und anschließend mit n-Butylacetat auf Spritzviskosität (Auslaufzeit 20 sec., DIN-Becher 4 bei 23 °C) verdünnt. Bei den Vergleichsbeispielen wird zusätzlich noch je eine Formulierung unter Katalysatorzugabe (30 Teile 18 %ige Lösung von Dibutylzinndilaurat in n-Butylacetat, entsprechend 0,07 % fest/fest, und 46 Teile 4 %ige Lösung von Calciumoctoat in n-Butylacetat, entsprechend 0,43 % fest/fest) hergestellt. Die Mischungen werden anschließend auf Stahlbleche mit einer Trockenschichtdicke von 40 bis 50 µm aufgespritzt. Die Härtung der Lackschichten erfolgt entweder 1 Tag und 7 Tage bei Raumtemperatur oder nach 30 Minuten Ablüften bei Raumtemperatur sowohl 30 Minuten als auch 60 Minuten bei 80 °C im Umluftofen. Für die Härtung von 7 Tagen bei Raumtemperatur und 60 Minuten bei 80 °C werden jeweils die Pendelhärte nach König, die Kratzfestigkeit und Erichsentiefung, für die Härtung von 1 Tag bei Raumtemperatur die Pendelhärte nach König und für 30 Minuten bei 80 °C die Pendelhärte und Erichsentiefung geprüft. Die Prüfergebnisse sind in Tabelle 2 zusammengefaßt.

(Siehe Tabelle 2 Seite 10 f.)

Tabelle 2

| Beispiel Nr. | Menge Polyisocyanat 70%ig (Teile) | katalysiert ja/nein | Härtung bei Raumtemperatur 1 Tag PH (sec) | 7 Tage PH (sec) | KF | ET (mm) | Härtung bei 80 °C 30 min PH (sec) | KF | ET (mm) | 60 min PH (sec) | KF | ET (mm) |
|---|---|---|---|---|---|---|---|---|---|---|---|---|
| 1 | 144 | nein | 91 | 174 | 0 | 9,9 | 165 | 0 | 7,0 | 188 | 0 | 8,6 |
| 2 | 190 | nein | 98 | 174 | 0 | 10,1 | 175 | 0 | 9,5 | 190 | 0 | 9,5 |
| 3 | 240 | nein | 78 | 172 | 0 | 8,8 | 196 | 0 | 9,4 | 199 | 0 | 7,5 |
| 4 | 190 | nein | 61 | 161 | 1 | 9,7 | 196 | 1 | 10,0 | 193 | 1 | 9,6 |
| 5 | 190 | nein | 60 | 160 | 2 | 10,1 | 165 | 1 | 10,0 | 174 | 0 | 10,0 |
| 6 | 190 | nein | 144 | 195 | 0 | 8,4 | 193 | 0 | 9,4 | 182 | 0 | 8,6 |
| 7 | 144 | nein | 99 | 145 | 0 | 10,2 | 145 | 0 | 10,4 | 167 | 0 | 10,1 |
| I | 190 | nein | 40 | 158 | 3-4 | <1 | 162 | 3-4 | <1 | 185 | 3 | 1 |
| | 190 | ja | 72 | 143 | 2-3 | 9,3 | 162 | 2-3 | 8,6 | 171 | 1 | 7,6 |
| II | 190 | nein | 88 | 175 | 1 | <1 | 189 | 1 | <1 | 189 | 1 | 6,5 |
| | 190 | ja | 116 | 162 | 1 | 8,0 | 167 | 1 | 6,5 | 174 | 2 | 7,5 |
| III | 238 | nein | 105 | 192 | 1 | <1 | 195 | 1 | <1 | 209 | 1 | <1 |
| | 238 | ja | 135 | 190 | 1 | <1 | 200 | 1 | <1 | 203 | 1 | <1 |

PH : Pendelhärte nach König (sec)
KF : Krafzfestigkeit, Benotung 0 bis 5
ET : Erichsentiefung (mm)

2. Prüfung der pigmentierten Zweikomponenten-Reaktionslacke (entsprechend Beispielen 1 bis 7 und Vergleichsbeispielen I bis III)

500 Teile der Copolymerisatlösungen mit Festkörpergehalten von ca. 60 % bzw. 50 % (Vergleichsbeispiel III) werden mit 440 Teilen Titandioxid (Rutil) und 150 Teilen eines Lösungsmittelgemisches von n-Butylacetat/Xylol/Ethylglykolacetat 4 : 4 : 2 zu einem Lack angerieben. Zu dem pigmentierten Lackansatz werden jeweils die in Tabelle 2, Spalte 2, angegebenen stöchiometrischen Mengen der 70 %igen Polyisocyanatlösung (in Ethylglykolacetat/Xylol 1 : 1, NCO-Gehalt : ca. 12 %) zugegeben und die erhaltenen Lacke mit dem oben angegebenen Lösungsmittelgemisch auf Spritzviskosität (Auslaufzeit 20 sec, DIN-Becher 4 bei 23 °C) verdünnt. Bei den Vergleichsbeispielen wird zusätzlich noch je eine Formulierung unter Zugabe eines Katalysatorgemisches aus 30 Teilen 1 %iger Lösung von Dibutylzinndilaurat (entsprechend 0,07 % fest auf Bindemittel) und 46 Teilen 4 %iger Lösung von Calciumoctoat in n-Butylacetat (entsprechend 0,43 % fest auf Bindemittel) hergestellt. Die Lacke werden anschließend mit einer Trockenschichtdicke von ca. 50 µm auf Stahlbleche aufgespritzt. Die lackierten Bleche werden 30 Minuten bei Raumtemperatur abgelüftet und anschließend 60 Minuten bei 80 °C im Umluftoften getrocknet. Es wird die Pendelhärte nach König, die Kratzfestigkeit und Erichsentiefung der gehärteten Lackfilme, außerdem das pot life der fertigen Lackmischungen geprüft. Die Prüfergebnisse sind in Tabelle 3 zusammengefaßt. Die hier angegebenen Abkürzungen haben die gleiche Bedeutung wie in Tabelle 2. Sowohl die unpigmentierten als auch pigmentierten Lacke der Beispiele 1 bis 7 und Vergleichsbeispiele I bis III ergeben hochglänzende glatte Lackfilme. Die in den Tabellen 2 und 3 zusammengefaßten Prüfergebnisse zeigen eindeutig, daß die erfindungsgemäßen Lackmischungen schon ohne Katalysatorzugabe sehr rasch zu harten kratzfesten Schichten hoher Elastizität (hohe Erichsentiefung) aushärten und gleichzeitig verarbeitungsgerechte Topfzeiten ergeben. Die Vergleichsbeispiele ergeben dagegen unkatalysiert zwar ausreichend harte, teilweise kratzfeste, dagegen viel zu spröde Lackschichten. Bei Katalysatorzugabe erhält man zwar zum Teil deutlich elastischere Schichten, jedoch liegt das pot life dieser Lackmischungen wesentlich unter dem der erfindungsgemäßen katalysatorfreien Einstellungen.

(Siehe Tabelle 3 Seite 12 f.)

Tabelle 3

| Beispiel Nr. | Menge Polyisocyanat 70%ig (Teile) | katalysiert ja / nein | pot life*) (Stunden) | Härtung 60 min bei 80 °C PH (sec) | KF | ET (mm) |
|---|---|---|---|---|---|---|
| 1 | 144 | nein | 40 | 130 | 1 | 7,5 |
| 2 | 190 | " | 30 | 140 | 0-1 | 7,5 |
| 3 | 240 | " | 28 | 165 | 0-1 | 7,5 |
| 4 | 190 | " | 42 | 161 | 1 | 6,5 |
| 5 | 190 | " | 56 | 135 | 1 | 10,0 |
| 6 | 190 | " | 26 | 165 | 0-1 | 7,0 |
| 7 | 144 | " | 34 | 140 | 1 | 8,5 |
| I | 190 | nein | 50 | 120 | 2-3 | < 1 |
| | 190 | ja | 15 | 140 | 1 | 3,5 |
| II | 190 | nein | 45 | 139 | 1 | < 1 |
| | 190 | ja | 10 | 140 | 1 | < 1 |
| III | 238 | nein | 55 | 170 | 1 | < 1 |
| | 238 | ja | 18 | 180 | 0-1 | < 1 |

*) Zeit in Stunden bis zur Gelierung der auf Spritzviskosität eingestellten Lackmischungen Abkürzungen s. Tabelle 2

**Ansprüche**

1. Verfahren zur Herstellung von Überzügen auf der Basis von Umsetzungsprodukten von

(A) Polyhydroxypolyacrylatharzen aus Estern der Acrylsäure und/oder Methacrylsäure mit monofunktionellen aliphatischen Alkoholen, Monoestern der Acrylsäure und/oder Methacrylsäure mit polyfunktionellen aliphatischen Alkoholen und anderen copolymerisierbaren olefinisch ungesättigten Monomeren mit

(B) gegebenenfalls teilweise oder vollständig mit CH-, NH- oder OH-aciden Blockierungsmitteln verkappten, Isocyanuratgruppen aufweisenden Polyisocyanaten einer Funktionalität zwischen 2,5 und 6, dadurch gekennzeichnet, daß man als Polyhydroxypolyacrylatharze (A) hydroxylgruppenhaltige Copolymerisate aus

(a) 5 bis 70 Gew.-% mindestens eines Esters der allgemeinen Formel

$$HC-CH_2-R'-CH_2-O-\underset{\underset{O}{\|}}{C}-\overset{\overset{R}{|}}{C}=CH_2$$

wobei
R für Wasserstoff oder eine Methylgruppe,
R' für einen gerad- oder verzweigtkettigen Alkylenrest mit 2 bis 8 C-Atomen in der Hauptkette oder einen eine cycloaliphatische Gruppe enthaltenden Alkylenrest mit 5 bis 15 C-Atomen stehen,

(b) 0 bis 40 Gew.-% eines oder mehrerer Hydroxyalkylester der Acrylsäure und/oder Methacrylsäure mit 2 bis 3 C-Atomen in der Hauptkette des Hydroxyalkylrests,

(c) 10 bis 50 Gew.-% mindestens eines Alkylesters der Acrylsäure und/oder Methacrylsäure, der Homopolymerisate mit Glasübergangstemperaturen von + 5 °C bis + 120 °C bildet,

(d) 0 bis 20 Gew.-% eines Vinylaromaten,

(e) 10 bis 50 Gew.-% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von − 80 °C bis + 4,5 °C bildet,

(f) 0 bis 15 Gew.-% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

(g) 0 bis 10 Gew.-% einer α,β-monoolefinisch ungesättigten Mono- oder Dicarbonsäure mit 3 bis 5 C-Atomen oder eines Halbesters dieser Dicarbonsäuren,

(h) 0 bis 20 Gew.-% unter (a) bis (g) nicht genannter Monomerer, deren einpolymerisierte Reste gegenüber Isocyanatgruppen inert sind,

mit der Maßgabe, daß die Summe der unter (a) und (b) genannten Prozentzahlen 5 bis 70, die Summe der unter (c) und (d) genannten Prozentzahlen 10 bis 50 und die Summe der Prozentzahlen der unter (a) bis (h) genannten Komponenten 100 beträgt,

und als Isocyanuratgruppen aufweisende Polyisocyanate (B) einer Funktionalität zwischen 2,5 und 6 solche mit vorwiegend cycloaliphatisch gebundenen Isocyanatgruppen einsetzt.

2. Verfahren gemäß Anspruch 1, dadurch gekennzeichnet, daß man als cycloaliphatisches isocyanuratgruppenhaltiges Polyisocyanat (B) ein aus 3-Isocyanatomethyl-3,5,5-trimethyl-cyclohexylisocyanat als monomerem Diisocyanat erhaltenes Produkt verwendet.

3. Verfahren nach Anspruch 1 oder 2, dadurch gekennzeichnet, daß Hydroxylzahlen der hydroxylgruppenhaltigen Copolymerisate (A) zwischen 30 und 200 liegen.

4. Verfahren nach einem der vorhergehenden Ansprüche, dadurch gekennzeichnet, daß als Komponente (a) des hydroxylgruppenhaltigen Copolymerisates Butandiol-1,4-monoacrylat oder -methacrylat eingesetzt wird.

5. Verfahren nach einem der Ansprüche 1 bis 3, dadurch gekennzeichnet, daß als Komponente (a) des hydroxylgruppenhaltigen Copolymerisats Hexandiol-1,6-monoacrylat oder -methacrylat eingesetzt wird.

6. Verfahren nach einem der vorhergehenden Ansprüche, dadurch gekennzeichnet, daß man die mengenverhältnisse der Reaktionskomponenten (A) und (B) so wählt, daß das Äquivalentverhältnis von gegebenenfalls teilweise oder vollständig mit CH-, NH- oder OH-aciden Blockierungsmitteln verkappten Isocyanatgruppen zu reaktionsfähigen Hydroxylgruppen zwischen 0,25 : 1 und 4 : 1 liegt.

7. Verfahren nach einem der vorhergehenden Ansprüche, dadurch gekennzeichnet, daß als Blockierungsmittel für das gegebenenfalls teilweise oder vollständig verkappte Polyisocyanat ein monofunktionelles Ketoxim eingesetzt wird.

8. Verfahren nach einen der Ansprüche 1 bis 6, dadurch gekennzeichnet, daß als Blockierungsmittel für das Polyisocyanat Dimethylketoxim oder Methylethylketoxim verwendet wird.

**Claims**

1. A process for the production of coatings based on reaction products of

(A) polyhydroxypolyacrylate resins prepared from esters of acrylic acid and/or methacrylic acid with monofunctional aliphatic alcohols, or from monoesters of acrylic acid and/or methacrylic acid with polyfunctional aliphatic alcohols and other copolymerizable olefinically unsaturated monomers, with

(B) polyisocyanates having a functionality of from 2.5 to 6 which contain isocyanurate groups and may or may not be partially or completely blocked with CH-, NH- or OH-acidic blocking agents, wherein there are used, as polyhydroxypolyacrylate resins (A), hydroxyl-containing copolymers produced from

(a) 5 to 70 % by weight of at least one ester of the general formula

$$HO-CH_2-R'-CH_2-O-\underset{\displaystyle O}{\underset{\|}{C}}-\overset{\displaystyle R}{\overset{|}{C}}=CH_2$$

where R is hydrogen or methyl, and R′ is linear or branched alkylene having 2 to 8 carbon atoms in the main chain, or alkylene containing 5 to 15 carbon atoms and a cycloaliphatic group,

(b) 0 to 40 % by weight of one or more hydroxyalkyl esters of acrylic acid and/or methacrylic acid, 2 or 3 carbon atoms being present in the main chain of the hydroxyalkyl,

(c) 10 to 50 % by weight of at least one alkyl ester of acrylic acid and/or methacrylic acid, which forms a homopolymer having a glass transition temperature of from + 5 °C to + 120 °C,

(d) 0 to 20 % by weight of a vinyl-aromatic,

(e) 10 to 50 % by weight of at least one alkyl ester and/or alkyl glycol ester, containing up to 2 ether-oxygen bridges, of acrylic acid and/or methacrylic acid, which esters form homopolymers having a glass transition temperature of from − 80 °C to + 4.5 °C,

(f) 0 to 15 % by weight of an acrylamide and/or methacrylamide which may, if desired, bear on the amide nitrogen one or two alkyls having 1 to 8 carbon atoms and optionally containing a carbonyl group, or one of two phenyls as substituents,

(g) 0 to 10 % by weight of an α,β-monoolefinically unsaturated mono- or dicarboxylic acid of 3 to 5 carbon atoms, or of half-ester of these dicarboxylic acids,

(h) 0 to 20 % by weight of monomers not specified under (a) to (g) whose polymerized radicals are inert to isocyanate groups,

with the proviso that the sum of the percentages indicated under (a) and (b) is 5 to 70, the sum of the percentages indicated under (c) and (d) is 10 to 50, and the sum of the percentages of the components specified under (a) to (h) is 100,

and, as polyisocyanates (B) which have a functionality of from 2.5 to 6 and contain isocyanurate groups, those having mainly cycloaliphatically bonded isocyanate groups.

2. A process as claimed in claim 1, wherein a product obtained from 3-isocyanato-methyl-3,5,5-trimethylcyclohexyl isocyanate as monomeric diisocyanate is used as the cycloaliphatic polyisocyanate (B) containing isocyanurate groups.

3. A process as claimed in claim 1 or 2, wherein the OH number of the hydroxyl-containing copolymers (A) is from 30 to 200.

4. A process as claimed in any of the preceding claims, wherein 1,4-butanediol monoacrylate or monomethacrylate is used as component (a) of the hydroxyl-containing copolymer.

5. A process as claimed in any of claims 1 to 3, wherein 1,6-hexanediol monoacrylate or monomethacrylate is used as component (a) of the hydroxyl-containing copolymer.

6. A process as claimed in any of the preceding claims, wherein the relative proportions of reaction components (A) and (B) are so chosen that the equivalent ratio of the isocyanate groups, which may or may not be partially or completely blocked with CH-, NH- or OH-acidic blocking agents, to reactive hydroxyl groups is from 0,25 : 1 to 4 : 1.

7. A process as claimed in any of the preceding claims, wherein a monofunctional ketoxime is used as blocking agent for the polyisocyanate which may or may not be partially or completely blocked.

8. A process as claimed in any of claims 1 to 6, wherein dimethyl ketoxime or methyl ethyl ketoxime is used as blocking agent for the polyisocyanate.

**Revendications**

1. Procédé d'obtention de revêtements à base de produits de réaction de

(A) résines polyhydroxypolyacrylate à partir d'esters de l'acide acrylique et/ou méthacrylique et d'alcools aliphatiques monofonctionnels, de monoesters d'acide acrylique et/ou méthacrylique et d'alcools aliphatiques polyfonctionnels et d'autres monomères à insaturation oléfinique, copolymérisables, avec

(B) des polyisocyanates, d'une fonctionnalité comprise entre 2,5 et 6, comportant des groupes isocyanurate éventuellement masqués, partiellement ou totalement, avec des agents de blocage CH-, NH-, ou OH-acides, caractérisé par le fait que l'on utilise, comme résines polyhydroxypolyacrylate (A) des copolymérisats à groupes hydroxyle obtenus à partir de

(a) 5 à 70 % en poids d'au moins un ester de formule générale :

$$HO-CH_2-R'-CH_2-O-\underset{\underset{O}{\|}}{C}-\overset{\overset{R}{|}}{C}=CH_2$$

dans laquelle R représente hydrogène ou un groupe méthyle, R' un reste alkylène à chaîne droite ou ramifiée ayant 2 à 8 atomes C dans la chaîne principale, ou un reste alkylène ayant 5 à 15 atomes-C et contenant un groupe cycloaliphatique.

(b) 0 à 40 % en poids d'un ou plusieurs hydroxyalkylesters de l'acide acrylique et/ou méthacrylique ayant 2 à 3 atomes C dans la chaîne principale du reste hydroxyalkyle

(c) 10 à 50 % en poids d'au moins un alkylester de l'acide acrylique et/ou méthacrylique, qui forme des homopolymérisats à température de transition vitreuse de + 5 °C à + 120 °C

(d) 0 à 20% en poids d'un vinylaromate

(e) 10 à 50 % en poids d'au moins un alkylester et/ou alkylglycolester, contenant jusqu'à 2 ponts éther-oxygène, de l'acétate acrylique et/ou méthacrylique, qui forme des homopolymérisats à température de transition vitreuse de − 80 °C à + 4,5 °C

(f) 0 à 15 % en poids d'un amide de l'acide acrylique et/ou méthacrylique, qui porte éventuellement, comme substituants sur l'azote de l'amide, soit un ou deux restes alkyle ayant 1 à 8 atomes de carbone, qui peuvent éventuellement contenir un groupe carbonyle, soit un ou deux restes phényle,

(g) 0 à 10 % en poids d'un acide mono- ou dicarboxylique, à insaturation α,β monooléfinique, ayant 3 à 5 atomes C, ou un semi-ester de ces acides dicarboxyliques

(h) 0 à 20 % en poids de monomères, non désignés sous (a) à (g), dont les restes en polymérisation sont inertes vis-à-vis des groupes isocyanate,

sous réserve que la somme des pourcentages indiqués sous (a) et (g) soit comprise entre 5 et 70, que la somme des pourcentages indiqués sous (c) et (d) soit comprise entre 10 et 50 et que la somme des pourcentages des composants indiqués sous (a) à (h) soit 100,

et, comme polyisocyanates (B) comportant des groupes isocyanurate et d'une fonctionalité comprise entre 2,5 et 6, on utilise ceux ayant des groupes isocyanate en majorité liés de façon cycloaliphatique.

2. Procédé selon la revendication 1, caractérisé par le fait qu'on utilise, comme polyisocyanate (B) à groupes isocyanurate cycloaliphatiques, un produit obtenu à partir de 3-isocyanato-méthyl-3,5,5-triméthyl-cyclohexylisocyanate, comme diisocyanate monomère.

3. Procédé selon la revendication 1 ou 2, caractérisé par le fait que les indices d'hydroxyle des copolymérisats à groupes hydroxyle (A) sont compris entre 30 et 200.

4. Procédé selon l'une des revendications précédentes, caractérisé par le fait que, comme composant (a) du copolymérisat à groupes hydroxyle, on introduit du butanediol-1,4-monoacrylate ou -méthacrylate.

5. Procédé selon l'une des revendications 1 à 3, caractérisé par le fait que, comme composant (a) du copolymérisat à groupes hydroxyle, on introduit du hexanediol-1,6-monoacrylate ou -méthacrylate.

6. Procédé selon l'une des revendications précédentes, caractérisé par le fait qu'on choisit les rapports des quantités des composants de réactions (A) et (B) de façon que le rapport d'équivalent des groupes isocyanate éventuellement masqués, partiellement ou totalement, avec des agents de blocage CH-, NH-, ou OH-acides, aux groupes hydroxyle réactifs soit compris entre 0,25/1 et 4/1.

7. Procédé selon l'une des revendications précédentes, caractérisé par le fait que, comme agent de blocage pour le polyisocyanate éventuellement bloqué, partiellement ou totalement, on introduit une cétoxime monofonctionnelle.

8. Procédé selon l'une des revendications 1 à 6, caractérisé par le fait que, comme agent de blocage pour le polyisocyanate, on utilise la diméthylcétoxime ou la méthyléthylcétoxime.